# EUROPEAN PATENT SPECIFICATION

(11) **EP 1 715 751 B1**
(45) Date of publication and mention of the grant of the patent: **09.09.2009**
(21) Application number: 05701755.0
(22) Date of filing: 27.01.2005
(51) Int. Cl.: A23F 5/46, A23F 5/00

(54) **COFFEE COMPOSITION AND METHOD OF MAKING THE SAME**
KAFFEEZUSAMMENSETZUNG SOWIE VERFAHREN ZU IHRER HERSTELLUNG
COMPOSITION DE CAFE ET SON PROCEDE DE FABRICATION

(30) Priority: 28.01.2004 FI 20040119
(43) Date of publication of application: 02.11.2006
(73) Proprietor: Gilvaria Oy, 00330 Helsinki (FI)
(72) Inventor: PAULIG, Robert, FI-00330 Helsinki (FI)
(74) Representative: Lax, Monica Ingeborg
(86) International application number: PCT/FI2005/000052
(87) International publication number: WO 2005/072535

(56) References cited:
- JP-A- 56 026 151
- US-A- 4 165 752
- DATABASE WPI Week 199251, Derwent Publications Ltd., London, GB; AN 1992-422731, XP002987382 & SU 1 709 976 A1 (MOSC FOOD IND TECHN INST) 07 February 1992
- NATARAJAN C.P. ET AL: 'Studies on the Utilazation of Coffee Husk' JOURNAL ON SCIENTIFIC AND INDUSTRIAL RESEARCH vol. 11A, 1952, pages 410 - 411, XP002987383
- DATABASE WPI Week 200119, Derwent Publications Ltd., London, GB; Class D13, AN 2001-183733, XP002299650 & CN 1 273 797 A (XU J) 22 November 2000

## Description

### FIELD OF THE INVENTION

The invention relates to a coffee composition and a method for making the same. In particular, the invention relates to a method for making a better-tasting coffee.

### BACKGROUND OF THE INVENTION

High-quality coffee products have become more and more popular and an increasing number of people consume such products daily. It is, however, generally known in the field that producing high-quality coffee products is expensive, wherefore consumer prices are high, too. Since coffee production is limited by the growth cycle, crop season, geographical location and similar factors, the continually growing demand cannot be met by increasing the production of high-quality coffee.

Attempts have been made to cut down high production costs by using coffee blends containing both cheap and expensive coffee brands. Thus, expensive coffee brands, which, according to consumers, have a pleasant taste, have been blended with cheaper coffee brands. Consumers' positive senses about taste have thus been almost directly proportional to the amount of an expensive coffee brand. The more a blend contains a coffee brand with better taste characteristics, the more pleasant the taste of the blend is according to consumers. Hence, blend coffees have not helped to increase the production of high-quality coffee but have only increased the production of coffee of average quality.

Since it has not been possible to increase the production of high-quality coffee by using natural source materials, artificial flavouring agents have been used to improve the taste of coffee. However, this has not been very successful, because consumers do not like the idea of adding artificial substances to foodstuffs. In addition, it has not been possible to achieve natural taste characteristics by means of artificial additives. The use of artificial flavouring agents has, however, been justified by the fact that genuine and natural source materials are expensive and often hard to obtain in the quantities that would satisfy the demand.

In a typical method for making roasted and ground coffee, coffee beans are cleaned, blended and then roasted at a temperature of about 175 to 260°C for about 1 to 25 minutes. The roasting temperature and time are selected according to the desired end result. The selection also depends on the roaster itself. After roasting the beans are ground. Unfortunately, roasted and ground coffee prepared with this conventional method can have a bitter or sour taste or it may include other undesirable tastes.

US Patent 4 857 351 discloses a process for treating coffee beans to make a better-tasting coffee. In the process, green coffee beans are partially roasted under specific conditions to obtain partially roasted coffee beans. The partially roasted coffee beans are treated with either an alkaline solution comprising a base or an extract solution comprising water and from 1 to 12% coffee solids. Thereafter, the beans are roasted to a final degree of roast. US Patent 4 857 351 states that as to the taste of coffee, partial roasting is a critical step, because this roasting stage develops flavours responsible for the bad taste. In the presented process, these bad flavours are removed by treatment of the partially roasted beans either with an alkaline solution comprising a base or an extract solution.

Publication WO 02/063971 discloses a coffee composition with modified flavour characteristics. In this publication, the taste of a coffee composition is modified by using flavouring agents, which are artificial, naturally occurring or a combination thereof. The flavouring agents used are taste contributing acids, e.g. acids imparting a characteristic taste associated with nuts, berries, cocoa, vanilla, mint or chocolate. The presented process relates to adding new flavouring agents to coffee and not to enhancing the taste of the coffee itself.

US Patent 6 572 915 B1 discloses a method for enriching antioxidants in berry and fruit products. The object of the invention is to provide a "healthier" product rich in antioxidants. In the method, berry or fruit waste is dried and the dried waste is extracted by means of water or an organic solvent. The extract solution comprising antioxidants is recovered, after which the water or the organic solvent is removed from the extract. The antioxidant extract thus obtained is added to the product prepared from the original berry or fruit. The method does not aim at modifying the taste of the product.
Patent Publication SU 1 709 976 A1 discloses a composition comprising milled roasted coffe with milled roasted coffee grain shells in amounts of 0,1 - 5 % (per weight of roasted milled coffee grains). This composition is used for making coffee extract. The composition reduces losses and improves economics of making coffee since the coffee grains shells are also utlized in the coffee composition.
In Natarajan et al (J. Scientific and Industrial Research, vol 11A, 1952, pp 410 - 411) is a method for making coffee composition using coffee husk described. In the method described separated dried coffee husk is roasted before blending it with roasted coffee beans.

### BRIEF DESCRIPTION OF THE INVENTION

It is an object of the invention to provide a coffee composition and a method for making the same so as to reduce the above-mentioned problems. The object of the invention is achieved by a composition and a method, which are characterized by what is disclosed in the independent claims. The invention also relates to a coffee beverage and use of pulp and/or husk of a coffee cherry to modify the taste of a coffee composition made of coffee beans. The preferred embodiments of the invention are disclosed in the dependent claims.

The invention is based on the idea of breaking up a coffee cherry into pieces, after which the different parts of the coffee cherry are treated separately from each other and finally the treated parts are combined with each other. The coffee cherry comprises a husk and inside the husk, soft pulp surrounding two coffee beans. In breaking up the coffee cherry into pieces, the coffee beans are separated from the pulp and husk of the coffee cherry. In the method of the invention, the coffee beans are treated separately from the pulp and husk of the coffee cherry. In the method, the pulp and/or husk of the coffee cherry is/are dried, and possibly ground, separately from the coffee beans. The dried pulp and/or husk of the coffee cherry is/are combined with the roasted coffee bean to provide a coffee composition.

In this invention, the coffee cherry relates to a berry derived from a plant of the family *Rubiaceae*, genus *Coffea*. There are many coffee species. However, it is generally known that there are two primary commercial coffee species: *Coffea arabica*, which is known as arabica coffee, and *Coffea canephora*, which is known as robusta coffee. Coffees from the species *Arabica* are also generally called "Brazils" or they are classified as "other milds". Brazilian coffees come from Brazil and "other milds" are grown in other high-grade coffee producing countries, which are generally recognized as including Colombia, Guatemala, Sumatra, Indonesia, Costa Rica, Mexico, United States (Hawaii), El Salvador, Peru, Kenya, Ethiopia and Jamaica. *Coffea canephora*, i.e. robusta, is typically used as a low-cost extender for arabica coffees. These robusta coffees are typically grown in the lower regions of West and Central Africa, India, Southeast Asia, Indonesia, and also Brazil. A person skilled in the art will appreciate that a geographical area refers to a coffee growing region where the coffee growing process utilizes identical coffee seedlings and where the growing environment is similar.

The method of the invention provides the advantage that taste characteristics of coffee beans achieved during roasting can be improved and, on the other hand, taste characteristics that have been lost during roasting can be restored.

In an embodiment of the invention the coffee bean is treated in such a manner that its taste characteristics are diluted by a procedure comprising roasting and an alkaline solution treatment. After this, the coffee bean is provided with new taste characteristics by means of the pulp and/or husk of the coffee cherry. It can be said that, in this case, the coffee bean acts as a carrier for the flavours of the pulp and/or husk of the coffee cherry, the method providing the advantage that the taste characteristics of the coffee bean can be affected solely by the pulp and/or husk of the coffee cherry. This opens entirely new possibilities for regulating the taste of a coffee composition.

The method of the invention provides an additional advantage of preparing a coffee composition, in which fat-soluble acids contained in the coffee bean are partially or entirely replaced by water-soluble acids of the pulp and/or husk of the coffee cherry. Known coffee compositions comprise coffee beans containing a lot of fat and fat-soluble acids. When the coffee bean is roasted, the fat-soluble acids in it are chemically converted into other compounds, which are sensed as bad-tasting. On the other hand, some of the acids included in the coffee beans do not totally degrade during roasting and such acids can also cause the bad taste of the coffee. By using the method of the invention, these compounds that are sensed as bad-tasting can be at least partially removed and replaced by water-soluble acids of the pulp and husk of the coffee cherry usually sensed as good-tasting.

Without adhering to any theories, we believe that the taste of the coffee beverage of the invention is preserved better when it is kept, for instance, on a heating plate, for instance, because the fruit acids contained in the coffee cherry withstand the heating better than the fat-soluble acids of the coffee bean. Tests have also shown that the coffee beverage of the invention tastes good even when it is cold, which refers to characteristics similar to those of berry juices, for instance. The taste of a traditional, cold coffee has not been regarded as pleasant.

The method of the invention also provides the advantage that the taste characteristics of coffee can be preserved longer. In the dried pulp and/or husk of the coffee cherry the taste characteristics are preserved even during a very long storage time. This is known from traditional berry and fruit preservation by drying. However, the drying does not substantially improve the preservability of coffee beans, because they contain a lot of fat. As to the taste of coffee, one of the worst problems is fat oxidation. This is why coffee beans must be protected from the oxidation. Surprisingly it has been observed that preserving taste characteristics of dried coffee cherries can be combined with a coffee composition containing fatty coffee beans. Moreover, it has been observed that the method of the invention can also affect taste deterioration due to fat oxidation during storage.

The method of the invention can also affect the acidity of the coffee composition prepared. The darker the coffee beans become during roasting, the higher their pH. The acidity can also be affected by means of an alkaline solution treatment. When the acids contained in coffee are consumed, they cause irritation in the human digestive system, particularly in the stomach. Therefore, a coffee composition with a pH higher than usual is advantageous.

The method of the invention can also provide financial benefits. Conventionally, coffee is transported from its growing region as raw coffee to a roastery, which is typically located in another country than where the coffee has been grown. This is done, for instance, because roasteries often use several different coffee brands in their own blends to provide a good-tasting coffee of uniform quality. An important reason for transporting coffee as raw coffee is the poor preservability of roasted coffee. With the method of the present invention, the taste of coffee can, however, be improved in its land of production by using pulp and/or husk of the coffee cherry, and so there is no need for blending different coffee brands. In addition, it has been observed that pulp and/or husk of the coffee cherry can also improve the preservability of taste characteristics of coffee. Thus, growing, treatment, roasting and packing of coffee cherries can be concentrated in the same location, which provides production-logistic advantages, such as savings in transport charges. The finished, ground coffee product can be packed into a vacuum, where it takes a lot less room than raw coffee does.

### BRIEF DESCRIPTION OF THE FIGURES

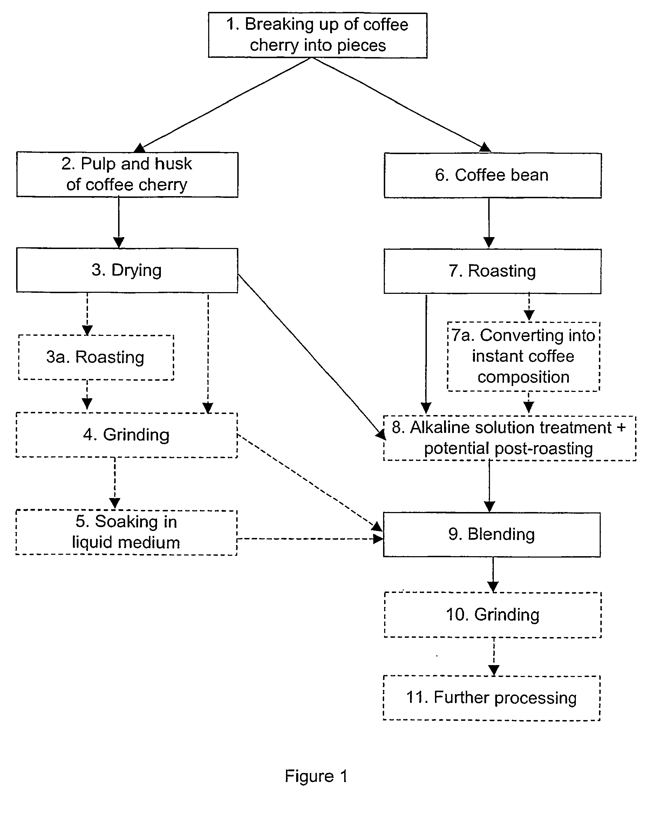

The invention will now be described in greater detail in connection with preferred embodiments, with reference to the attached drawing, in which
Figure 1 shows a flow chart of an embodiment of the method of the invention.

The method steps in Figure 1 are denoted with numbers 1 to 11. The numbering does not refer to the order in which the method steps are carried out but is only intended to be allusive.

The method steps shown in Figure 1 are:
1. Breaking up of a coffee cherry into pieces
2. Separated pulp and husk of the coffee cherry
3. Drying of the pulp and husk of the coffee cherry
   3a. Roasting of the pulp and husk of the coffee cherry
4. Grinding of the pulp and husk of the coffee cherry
5. Soaking the pulp and husk of the coffee cherry in a liquid medium
6. Separated coffee bean
7. Roasting of the coffee bean
   7a. Converting of the coffee beans into an instant coffee composition
8. Alkaline solution treatment of the coffee bean and a potential post-roasting or post-heating
9. Blending of the roasted coffee bean and the dried pulp and husk of the coffee cherry to achieve a coffee composition
10. Grinding of the coffee beans or the coffee composition
11. Further processing

### DETAILED DESCRIPTION OF THE INVENTION

The invention relates to a method for making a coffee composition, characterized by
a) separating coffee beans from the pulp and husk of a coffee cherry
b) roasting the coffee beans, and
c) adding dried pulp and/or husk of the coffee cherry to the roasted coffee beans.

In an embodiment of the method of the invention the coffee beans are cleaned before roasting. The cleaning of the coffee beans can also affect the taste of coffee, because the pulp of the coffee cherry which has been left on the surface of the coffee bean burns easily during the roasting, making the coffee taste unpleasant.

Figure 1 shows an embodiment of the invention, wherein the method also comprises a step of treating the coffee beans with an alkaline solution (step 8). In the alkaline solution treatment (8), the coffee beans can, for instance, be soaked in the alkaline solution or the alkaline solution can be sprayed onto the coffee beans. Such an alkaline solution is preferably an aqueous solution of a food-grade base. Examples of feasible bases include sodium carbonate, sodium hydrogen carbonate, sodium hydroxide, ammonium hydroxide, calcium hydroxide, ammonium bicarbonate or mixtures thereof. An aqueous solution of sodium carbonate or sodium hydrogen carbonate, generally known as a soda solution, is preferably used. Sodium hydrogen carbonate (NaHCO₃), i.e. sodium bicarbonate, is also known as baking soda, and sodium carbonate (Na₂CO₃) is also known as soda or caustic soda.

In a further embodiment of the invention the alkaline solution treatment (8) of the coffee beans is carried out after the coffee beans have been partially roasted. In the alkaline solution treatment, an alkaline solution is preferably sprayed onto the coffee beans after the roasting so that the beans are still warm (30 to 50°C). More preferably, the alkaline solution treatment is carried out in a mixing vessel having underpressure. In underpressure, it is easier to bring the alkaline solution into the pores of the coffee bean. This is followed by "post-roasting" or post-heating, whereby the temperature is kept high enough to vaporize substantially all of the alkaline solution.

In addition or as an alternative to the alkaline solution treatment, acids in the coffee bean can also be removed by means of a procedure known as deep roasting, wherein the coffee beans are roasted at a temperature of 200 to 300°C for about 3 to 20 minutes, after which they are held in isolation without further heating. In this way, also the cores of the coffee beans are roasted.

In an embodiment of the invention, the coffee beans are ground (10) after the roasting (7) and before the alkaline solution treatment (8). Thus, the alkaline solution treatment efficiently removes acids of the coffee beans as well as degradation products thereof. This kind of method has generally been thought to destroy the coffee, particularly if it is combined with post-roasting of ground coffee beans which have undergone the alkaline treatment. It has been considered that substantially all taste characteristics of coffee have been eliminated and the result is an almost tasteless, ground coffee bean. In the method of the present invention, this is perhaps a desired quality, since the procedure produces a substantially neutral carrier for the flavours of the pulp and/or husk of the coffee cherry. Thus, the taste characteristics of a coffee bean can be affected solely by the pulp and/or husk of the coffee cherry.

In the method of the invention, the coffee beans can also be ground (10) after the alkaline solution treatment (8). The grinding can be carried out either before or after the dried and ground pulp and/or husk of the coffee cherry is combined (9) with the roasted coffee beans.

In the method of the invention, the taste of coffee beans is improved by means of the pulp and/or husk of the coffee cherry. The dried pulp and/or husk of the coffee cherry can be blended with the roasted coffee beans as such or it/they can be ground (4) before the blending. In an embodiment, the dried (3) and ground (4) pulp and husk of the coffee cherry are mixed with a liquid medium (5) before they are blended (9) with the roasted coffee beans. The blending (9) can be implemented, for example, by spraying the liquid medium comprising the dried and ground pulp and husk of the coffee cherry onto the roasted coffee beans. The liquid medium can be, for example, water, alcohol or a mixture thereof.

The method of the invention can also comprise a step of converting the coffee composition into an instant coffee composition (7a). This can be carried out by known methods. The coffee composition achieved with the method of the invention can also be processed further (11) by using methods obvious to a person skilled in the art, such as by providing the method of the invention with caffeination or decaffeination. Decaffeination can be carried out by methods known to a person skilled in the art.

In the following, treatment of a coffee cherry is described on a general basis. The description is not intended to restrict the invention in any way.

Treatment of a coffee cherry begins with picking coffee cherries. Ripe cherries are picked manually from a coffee tree. The picked coffee cherries are cleaned either by washing with water or dry sorting. The pulp of the cleaned coffee cherries is separated from the beans. This can be done, for instance, by means of a "depulping apparatus".

Separation with a depulping apparatus can be implemented as a wet or dry method, the dry method being advantageous. In the wet method, ripe coffee cherries and water are fed into the depulping apparatus, whereas in the dry method no water is used. As to the operation of the equipment, it is essential that cherries are ripe, because raw or dry cherries cannot be processed in the apparatus. In this separation procedure, the outer husk and most of the pulp are removed from the coffee cherry. Damages to the coffee bean should be avoided, because it can lead to microbiological deterioration. After the husk and pulp of the coffee cherries are separated from the beans, the pulp and husk thus obtained are dried either naturally or by a machine.

In machine drying, a warm-air blower, drying drum, drying belt or combination thereof or other suitable drying apparatus can be used. The drying temperature is often critical. High temperatures can cause taste deterioration. Particularly in the beginning of the drying, temperatures of over 80°C should be avoided. On the other hand, the temperature of below 60°C prolongs the drying time considerably.

Natural drying occurs as a thin layer on a suitable base, where the pulp and husk are subjected to solar radiation. Sun drying takes place on a dry ground, grates or a solid concrete surface, for instance. Regardless of the base, the pulp and husk are spread to form a thin layer of about 30 to 40 mm. During the drying the pulp and husk to be dried should be turned from side to side at regular intervals. Particularly in the early stages of the drying, the turning should be performed frequently to prevent the growth of yeast.

In sun drying, the duration of the drying process depends on the thickness of the cherry layer and the weather conditions, such as temperature and air humidity. In machine drying, the duration of the drying process can be regulated, for example, by means of the temperature of the drying air. In both drying methods the duration of the drying process is also affected by the ripeness and water content of the cherries. After the drying, the water content of the pulp and husk of the coffee cherry is about 12 to 16%.

In addition to drying, pulp of the coffee cherry can be roasted or heated so that the fructose in it is partly caramelized. This roast is considerably milder than that of the coffee beans to prevent the pulp from burning. Mild roasting imparts the raw material to be prepared a pleasant, sweet taste.

Dried and possibly roasted pulp and husk of the coffee cherry, obtained with the methods mentioned above, can be used as such to improve the taste of coffee or they can be ground before use. They can also be blended with other dry or liquid raw materials before use. Thus, the invention also relates to the use of the pulp and/or husk of a coffee cherry to modify the taste of a coffee composition made of coffee beans.

In the method of the invention, the coffee beans can be roasted by using conventional methods. A person skilled in the art knows that different types of coffee beans require different roasting conditions. The roasting can be carried out by a roaster, such as a hot fluid-bed roaster.

The roasting can also be performed in several stages. At first, surface roasting can be carried out. Surface roasting means that the roasting takes place in a relatively short time, whereby the bean does not have enough time to heat evenly along its entire volume, but only along its surface. In this case, the beans can be heated for example such that the surface of the bean achieves a temperature of 210 to 230°C. The surface roasting can be interrupted by a water spray, and after the surface temperature of the bean has fallen to the desired temperature, such as 180 to 190°C, the beans can be transferred to an air cooling chamber. After the cooling, an alkaline treatment can be carried out, if necessary.

After the surface roasting, "deep roasting" or internal roasting can be carried out separately. In this case, the beans are transferred back to the roaster and the temperature is raised to the desired level, such as to 210 to 230°C. The heating is interrupted by a short water spray lasting about 5 to 15 seconds. Then the heat stored in the beans is allowed to continue the roasting for a desired time, during which also the inner parts of the bean are roasted. This can last for 2 to 5 minutes, for instance. To finish the roasting, the coffee beans are supplied to a cooling tank where they are cooled.

The invention also relates to a coffee composition, which is characterized in that it comprises roasted coffee beans, pulp of coffee cherries and/or husk of coffee cherries. The coffee composition of the invention preferably comprises dried pulp and/or husk of coffee cherries.

In an embodiment, the coffee composition comprises 0.01 to 50 parts by weight of pulp and/or husk of the coffee cherry and 50 to 100 parts by weight of coffee bean. Preferably the coffee composition comprises 0.1 to 25 parts by weight, more preferably 0.5 to 10 parts by weight, most preferably 1 to 5 parts by weight of dried pulp and/or husk of the coffee cherry and 100 parts by weight of coffee bean.

The coffee composition of the invention can also comprise additives, such as inert fillers and carriers, natural or artificial flavouring agents, dairy products, foaming agents, natural or artificial sweetening agents, and the like.

The coffee composition may also comprise coffee beans derived from one or more coffee species. In this case, the coffee composition can comprise, for instance, *Coffea arabica* and *Coffea canephora* coffee beans, i.e. arabica and robusta coffee beans. Coffee beans can also be derived from a coffee species different from that of the pulp and husk of the coffee cherry. Thus, the coffee composition may contain coffee beans of the coffee species *Coffea canephora* and pulp and/or husk of the coffee cherry belonging to the coffee species *Coffea arabica.*

The coffee composition can also be prepared in such a manner that coffee compositions obtained by means of different embodiments of the method of the invention are blended with each other. Thus, the composition containing coffee beans can comprise, in desired proportions, beans treated with an alkaline solution or untreated beans, surface-roasted or deep-roasted beans, or low-acid or high-acid beans. A deep-roasted bean can be roasted at a temperature of 200 to 300°C for about 3 to 20 minutes, for instance. During this kind of roasting, the acidity of the coffee decreases and the coffee obtains its strong, dark colour. If the colour needs to be made lighter, these deep-roasted beans (50 to 100% of weight) can be blended with low-acid coffee beans (0 to 50% of weight) which have not been deep-roasted, in which case the amount of the latter can be used to regulate the darkness of the coffee. To the above mentioned coffee bean blends, a required amount of dried pulp and/or husk of coffee cherries can then be added.

The coffee composition of the invention can be in the form of a coffee powder to be extracted or brewed or a soluble coffee powder. In other words, it can be coarse-ground coffee, filter coffee or instant coffee. On the other hand, the coffee composition of the invention can also comprise whole roasted coffee beans.

The invention further relates to a coffee beverage comprising the coffee composition of the invention and water. Such a coffee beverage can be prepared with methods known to a person skilled in the art, such as by extracting with water, brewing in water or soaking the coffee composition of the invention in water. The coffee beverage of the invention can also comprise other substances, such as natural or artificial flavouring substances, milk products, alcohol, foaming agents, natural or artificial sweetening agents, and the like.

### EXAMPLE 1

30 kg of Santos Brasil raw coffee was charged into a hot fluid-bed roaster. Coffee beans were roasted as surface roasting to a bean surface temperature of 218°C. The roasting was interrupted by water spraying lasting 15 seconds. After the beans had cooled to a temperature of 180 to 190°C, they were transported to an air cooling chamber where they were cooled to a temperature of 30 to 50°C. The cooled beans were placed into a mixing chamber, in which underpressure was produced, after which 900 g of sodium hydrogen carbonate solution (pH 8) was sprayed onto the coffee beans in the chamber, simultaneously stirring the coffee beans. The mixture was left to dry for 3 minutes, after which the beans were transferred to the roaster again. The surface temperature of the beans was raised to 210°C, after which the roasting was interrupted by a water spray of 10 seconds. The beans underwent deep roasting of 3 minutes, during which the alkaline solution evaporated. Then the coffee beans were placed into the cooling chamber and cooled approximately to the room temperature.

The roasted coffee product thus obtained, from which undesirable acid components had been removed, was taken to further processing.

### EXAMPLE 2

Husk and pulp of Brazilian coffee cherries were separated from the beans by means of a depulping apparatus. The separation was carried out by a dry method using a depulping apparatus. After the husk and pulp of the coffee cherries had been separated from the beans, the pulp and husk obtained were dried by means of a warm-air blower at a temperature of 70°C. During the drying the material to be dried was turned from side to side. The drying was continued until the water content of the pulp and husk of the coffee cherry was about 14%. The product obtained was ground.

### EXAMPLE 3

The coffee bean product roasted in accordance with Example 1 was treated with a solution containing pulp and husk of coffee cherries. Said solution was prepared by mixing water and dried and ground pulp and husk of the coffee cherry obtained in Example 2, whereby the dry solids content of said solution was about 10% by weight. The weight ratio of the coffee beans to the pulp and husk of the coffee cherry was 100:3. The coffee beans were treated in a vacuum mixing chamber, in which said solution was sprayed onto the coffee beans. The solution was allowed to be absorbed into the pores of the coffee beans, after which the beans were removed from the mixing vessel and were allowed to dry.

The modified taste characteristics of the coffee beans obtained were tested by grinding the beans and making a coffee beverage from the ground beans. The coffee beverage was made conventionally by extracting the ground coffee beans with boiling water. Test persons noticed the taste difference with respect to a coffee beverage made from corresponding beans, to which, however, no solution containing pulp or husk of the coffee cherry had been added.

### EXAMPLE 4

1000 g of coffee beans roasted with the method of Example 1 were ground and 30 g of dry, ground pulp and husk of the coffee cherry, obtained in example 2, were blended with the powder obtained. The taste of the ground coffee product thus obtained was assessed as in Example 3.

## Claims

1. A method for making a coffee composition, **characterized by**
a) separating coffee beans from the pulp and husk of a coffee cherry
b) roasting the coffee beans, and
c) adding dried pulp and/or husk of the coffee cherry to the roasted coffee beans.

2. A method as claimed in claim 1, **characterized by** cleaning the coffee beans before roasting.

3. A method as claimed in claim 1 or 2, **characterized by** the method further comprising a step of treating the coffee beans with an alkaline solution.

4. A method as claimed in any one of claims 1 to 3, **characterized by** the method further comprising a step of grinding the coffee beans.

5. A method as claimed in any one of claims 1 to 4, **characterized by** grinding the dried pulp and/or husk of the coffee cherry.

6. A method as claimed in any one of claims 1 to 5, **characterized by** mixing the dried pulp and/or husk of the coffee cherry with a liquid medium and combining this mixture with the roasted coffee beans.

7. A method as claimed in claim 6, **characterized by** performing the combining by spraying the liquid medium comprising dried and ground pulp and husk of the coffee cherry onto the roasted coffee beans.

8. A method as claimed in claim 6 or 7, **characterized by** the liquid medium being water, alcohol or a mixture thereof.

9. A method as claimed in any one of claims 1 to 8, **characterized by** converting the coffee composition obtained into an Instant coffee composition.

10. A method as claimed in any one of claims 1 to 9, **characterized by** roasting the coffee beans in several stages, whereby the alkaline solution treatment is carried out between the different roasting stages.

11. A method as claimed in any one of claims 1 to 10, **characterized by** drying the pulp and husk of the coffee cherry at a temperature of 60 to 80°C to a moisture content of 12 to 16%.

12. A coffee composition, **characterized in that** it comprises
a) roasted coffee beans
b) pulp of a coffee cherry and/or husk of a coffee cherry, and
c) coffee beans treated with an alkaline solution.

13. A coffee composition as claimed in claim 12, **characterized in that** the pulp and husk of the coffee cherry are dried.

14. A coffee composition as claimed in claim 12 or 13, **characterized in that** the composition comprises:
a) 50 to 100 parts by weight of roasted coffee bean, and
b) 0.01 to 50 parts by weight of pulp of the coffee cherry and/or husk of the coffee cherry, calculated on dry substance.

15. A coffee composition as claimed in claim 14, **characterized in that** the composition comprises:
a) 100 parts by weight of roasted coffee bean, and
b) 0.1 to 25 parts by weight of pulp of the coffee cherry and/or husk of the coffee cherry, calculated on dry substance.

16. A coffee composition as claimed in any one of claims 12 to 15, **characterized in that** it further comprises one or more additives selected from the group consisting of fillers and carriers, natural and artificial flavouring agents, dairy products, foaming agents, natural and artificial sweetening agents.

17. A coffee composition as claimed in any one of claims 12 to 16, **characterized in that** the composition comprises coffee beans derived from one or more coffee species.

18. A coffee composition as claimed in claim 17, **characterired in that** the composition comprises *Coffea arabica* and *Coffea canephora* (robusta) coffee beans.

19. A coffee composition as claimed in any one of claims 12 to 17, **characterized in that** the coffee beans are derived from a coffee species different from that of the pulp and husk of the coffee cherry.

20. A coffee composition as claimed in claim 19, **characterized in that** the composition comprises coffee beans of the coffee species *Coffea canephora* (robusta) and pulp of coffee cherries and/or husk of coffee cherries belonging to the coffee species *Coffea arabica*.

21. A coffee composition as claimed in any one of claims 12 to 20, **characterized in that** it is in the form of a coffee powder to be extracted or brewed, or a soluble coffee powder.

22. A coffee beverage, **characterized in that** it comprises a coffee composition as claimed in any one of claims 12 to 20 and water.

23. A coffee beverage as claimed in claim 22, **characterized in that** it is prepared by extracting with water, brewing in water or soaking the coffee composition of the invention in water.

## Patentansprüche

1. Verfahren zur Herstellung einer Kaffeezusammensetzung, **gekennzeichnet durch**
a) Trennen von Kaffeebohnen von der Pulpe und Schale einer Kaffeekirsche
b) Rösten der Kaffeebohnen und
c) Hinzufügen von getrockneter Pulpe und/oder Schale der Kaffeekirsche zu den gerösteten Kaffeebohnen.

2. Verfahren nach Anspruch 1, **dadurch gekennzeichnet, dass** die Kaffeebohnen vor dem Rösten gereinigt werden.

3. Verfahren nach Anspruch 1 oder 2, **dadurch gekennzeichnet, dass** das Verfahren weiter einen Schritt aufweist, in dem die Kaffeebohnen mit einer Alkalilösung behandelt werden.

4. Verfahren nach einem der Ansprüche 1 bis 3, **dadurch gekennzeichnet, dass** das Verfahren weiter einen Schritt aufweist, in dem die Kaffeebohnen gemahlen werden.

5. Verfahren nach einem der Ansprüche 1 bis 4, **dadurch gekennzeichnet, dass** die getrocknete Pulpe und/oder Schale der Kaffeekirsche gemahlen wird/werden.

6. Verfahren nach einem der Ansprüche 1 bis 5, **dadurch gekennzeichnet, dass** die getrocknete Pulpe und/oder Schale der Kaffeekirsche mit einem flüssigen Medium gemischt wird/werden und diese Mischung mit den gerösteten Kaffeebohnen verbunden wird.

7. Verfahren nach Anspruch 6, **dadurch gekennzeichnet, dass** die Verbindung derart ausgeführt wird, dass das getrocknete und gemahlene Pulpe und Schale der Kaffeekirsche enthaltende flüssige Medium auf die gerösteten Kaffeebohnen gespritzt wird.

8. Verfahren nach Anspruch 6 oder 7, **dadurch gekennzeichnet, dass** das flüssige Medium Wasser, Alkohol oder deren Mischung ist.

9. Verfahren nach einem der Ansprüche 1 bis 8, **dadurch gekennzeichnet, dass** die erhaltene Kaffeezusammensetzung in eine Instantkaffeezusammensetzung umgesetzt wird.

10. Verfahren nach einem der Ansprüche 1 bis 9, **dadurch gekennzeichnet, dass** die Kaffeebohnen in mehreren Phasen geröstet werden, wobei die Behandlung mit einer Alkalilösung zwischen den verschiedenen Röstphasen durchgeführt wird.

11. Verfahren nach einem der Ansprüche 1 bis 10, **dadurch gekennzeichnet, dass** die Pulpe und Schale der Kaffeekirsche bei einer Temperatur von 60 bis 80°C auf einen Feuchtigkeitsgehalt von 12 bis 16% getrocknet werden.

12. Kaffeezusammensetzung, **dadurch gekennzeichnet, dass** sie
a) geröstete Kaffeebohnen
b) Pulpe einer Kaffeekirsche und/oder Schale einer Kaffeekirsche und
c) mit einer Alkalilösung behandelte Kaffeebohnen aufweist.

13. Kaffeezusammensetzung nach Anspruch 12, **dadurch gekennzeichnet, dass** die Pulpe und Schale der Kaffeekirsche getrocknet werden.

14. Kaffeezusammensetzung nach Anspruch 12 oder 13, **dadurch gekennzeichnet, dass** die Zusammensetzung
a) 50 bis 100 Gewichtsteile geröstete Kaffeebohne und
b) 0,01 bis 50 Gewichtsteile Pulpe der Kaffeekirsche und/oder Schale der Kaffeekirsche, gerechnet vom Trockenstoff, aufweist.

15. Kaffeezusammensetzung nach Anspruch 14, **dadurch gekennzeichnet, dass** die Zusammensetzung
a) 100 Gewichtsteile geröstete Kaffeebohne und
b) 0,1 bis 25 Gewichtsteile Pulpe der Kaffeekirsche und/oder Schale der Kaffeekirsche, gerechnet vom Trockenstoff, aufweist.

16. Kaffeezusammensetzung nach einem der Ansprüche 12 bis 15, **dadurch gekennzeichnet, dass** sie weiter ein oder mehrere Zusatzmittel aufweist, das/die aus der Gruppe von Füllungsmitteln und Trägern, natürlichen und künstlichen Aromastoffen, Molkereiprodukten, Schaumbildnern, natürlichen und künstlichen Süßmitteln ausgewählt wird/werden.

17. Kaffeezusammensetzung nach einem der Ansprüche 12 bis 16, **dadurch gekennzeichnet, dass** die Zusammensetzung Kaffeebohnen aufweist, die aus einer oder mehreren Kaffeearten stammen.

18. Kaffeezusammensetzung nach Anspruch 17, **dadurch gekennzeichnet, dass** die Zusammensetzung *Coffea arabica-* und *Coffea canephora* (Robusta) -Kaffeebohnen aufweist.

19. Kaffeezusammensetzung nach einem der Ansprüche 12 bis 17, **dadurch gekennzeichnet, dass** die Kaffeebohnen aus einer anderen Kaffeeart stammen, als der der Pulpe und Schale der Kaffeekirsche.

20. Kaffeezusammensetzung nach Anspruch 19, **dadurch gekennzeichnet, dass** die Zusammensetzung Kaffeebohnen der Kaffeeart *Coffea canephora* (Robusta) und Pulpe und/oder Schale von zur Kaffeeart *Coffea arabica* gehörenden Kaffeekirschen aufweist.

21. Kaffeezusammensetzung nach einem der Ansprüche 12 bis 20, **dadurch gekennzeichnet, dass** sie sich in Form einer zu extrahierenden oder aufzubrühenden Kaffeepulver oder einer löslichen Kaffeepulver befindet.

22. Kaffeegetränk, **dadurch gekennzeichnet, dass** es eine Kaffeezusammensetzung nach einem der Ansprüche 12 bis 20 und Wasser aufweist.

23. Kaffeegetränk nach Anspruch 22, **dadurch gekennzeichnet, dass** es derart hergestellt wird, dass es mit Wasser extrahiert oder in Wasser aufgebrüht wird oder dass die erfindungsgemäße Kaffeezusammensetzung in Wasser eingeweicht wird.

## Revendications

1. Procédé pour fabriquer une composition de café, **caractérisé en ce qu'**il comprend les étapes consistant à :
a) séparer les grains de café de la pulpe et des peaux des fruits entiers du caféier
b) torréfier les grains de café, et
c) ajouter la pulpe séchée et/ou les peaux séchées des fruits entiers du caféier aux grains de café torréfiés.

2. Procédé selon la revendication 1, **caractérisé en ce qu'**il comprend l'étape consistant à nettoyer les grains de café avant la torréfaction.

3. Procédé selon la revendication 1 ou la revendication 2, **caractérisé en ce que** le procédé comprend en outre une étape consistant à traiter les grains de café avec une solution alcaline.

4. Procédé selon l'une quelconque des revendications 1 à 3, **caractérisé en ce que** le procédé comprend en outre une étape consistant à moudre les grains de café.

5. Procédé selon l'une quelconque des revendications 1 à 4, **caractérisé en ce qu'**il comprend l'étape consistant à moudre la pulpe séchée et/ou les peaux séchées des fruits entiers du caféier.

6. Procédé selon l'une quelconque des revendications 1 à 5, **caractérisé en ce qu'**il comprend l'étape consistant à mélanger la pulpe séchée et/ou les peaux séchées des fruits entiers du caféier avec un milieu liquide et à combiner ce mélange avec les grains de café torréfiés.

7. Procédé selon la revendication 6, **caractérisé en ce qu'**il comprend l'étape consistant à réaliser ladite combinaison en pulvérisant le milieu liquide comprenant la pulpe et les peaux séchées et moulues des fruits entiers du caféier sur les grains de café torréfiés.

8. Procédé selon la revendication 6 ou la revendication 7, **caractérisé en ce que** le milieu liquide est de l'eau, de l'alcool ou un mélange de ceux-ci.

9. Procédé selon l'une quelconque des revendications 1 à 8, **caractérisé en ce qu'**il comprend l'étape consistant à convertir la composition de café obtenue en une composition de café instantané.

10. Procédé selon l'une quelconque des revendications 1 à 9, **caractérisé en ce que** la torréfaction des grains de café est réalisée en plusieurs étapes, le traitement avec la solution alcaline étant réalisé entre les différentes étapes de torréfaction.

11. Procédé selon l'une quelconque des revendications 1 à 10, **caractérisé en ce qu'**il comprend l'étape consistant à sécher la pulpe et les peaux des fruits entiers du caféier à une température comprise entre 60 et 80°C à une teneur en humidité comprise entre 12 et 16%.

12. Composition de café, **caractérisée en ce qu'**elle comprend
a) des grains de café torréfiés
b) de la pulpe de fruits entiers du caféier et/ou les peaux des fruits entiers du caféier, et
c) des grains de café traités avec une solution alcaline.

13. Composition de café selon la revendication 12, **caractérisée en ce que** la pulpe et les peaux des fruits entiers du caféier sont séchées.

14. Composition de café selon la revendication 12 ou 13 ; **caractérisée en ce que** la composition comprend :
a) 50 à 100 parties en poids de grains de café torréfiés, et
b) 0,01 à 50 parties en poids de pulpe de fruits entiers du caféier et/ou de peaux de fruits entiers du caféier, calculées sur la base de la substance séchée.

15. Composition de café selon la revendication 14, **caractérisée en ce que** la composition comprend :
a) 100 parties en poids de grains de café torréfié, et
b) 0,1 à 25 parties en poids de pulpe de fruits entiers du caféier et/ou de peaux de fruits entiers du caféier, calculées sur la base de la substance séchée.

16. Composition de café selon l'une quelconque des revendications 12 à 15, **caractérisée en ce qu'**elle comprend en outre un ou plusieurs additifs sélectionnés parmi le groupe se composant d'agents de remplissage et de substances inertes, d'agents aromatisants naturels et artificiels, de produits laitiers, d'agents moussants, d'édulcorants naturels et artificiels.

17. Composition de café selon l'une quelconque des revendications 12 à 16, **caractérisée en ce que** la composition comprend des grains de café dérivés d'une ou plusieurs variétés de café.

18. Composition de café selon la revendication 17, **caractérisée en ce que** la composition comprend des grains de café provenant du *Café arabica* (Coffea arabica) et du *Café canephora* (robusta).

19. Composition de café selon l'une quelconque des revendications 12 à 17, **caractérisée en ce que** les grains de café sont dérivés de variétés de café différentes de celle de la pulpe et des peaux des fruits entiers du caféier.

20. Composition de café selon la revendication 19, **caractérisée en ce que** la composition comprend des grains de café provenant de la variété *Café canephora* (robusta) et de la pulpe de fruits entiers du caféier et/ou des peaux des fruits entiers du caféier provenant de la variété *Café arabica* (Coffea arabica).

21. Composition de café selon l'une quelconque des revendications 12 à 20, **caractérisée en ce qu'**elle est sous la forme d'une poudre de café à extraire ou à infuser, ou d'une poudre de café soluble.

22. Boisson à base de café, **caractérisée en ce qu'**elle comprend une composition de café selon l'une quelconque des revendications 12 à 20 et de l'eau.

23. Boisson à base de café selon la revendication 22, **caractérisée en ce qu'**elle est préparée par extraction avec de l'eau, par infusion dans de l'eau ou par immersion de la composition de café selon la présente invention dans de l'eau.
